(19) **Europäisches Patentamt / European Patent Office / Office européen des brevets**

(11) **EP 4 276 931 B1**

(12) # EUROPEAN PATENT SPECIFICATION

(45) Date of publication and mention
of the grant of the patent:
**27.05.2026 Bulletin 2026/22**

(21) Application number: **22916576.6**

(22) Date of filing: **19.12.2022**

(51) International Patent Classification (IPC):
**H01M 4/04** *(2006.01)*   **F26B 13/20** *(2006.01)*
**B65H 23/032** *(2006.01)*   **B65H 20/14** *(2006.01)*
**B30B 3/00** *(2006.01)*   **B05C 9/12** *(2006.01)*

(52) Cooperative Patent Classification (CPC):
**B65H 23/24; B65H 23/32; F26B 3/30; F26B 13/002;**
**F26B 13/103; F26B 13/16; F26B 21/37;**
**H01M 4/0404; H01M 4/0435; H01M 4/0471;**
B65H 2301/5114; B65H 2301/517; B65H 2801/72;
Y02E 60/10

(86) International application number:
**PCT/KR2022/020694**

(87) International publication number:
**WO 2023/128434 (06.07.2023 Gazette 2023/27)**

(54) **ELECTRODE SHEET DRYING APPARATUS, ELECTRODE SHEET MANUFACTURING SYSTEM COMPRISING SAME, AND ELECTRODE SHEET DRYING METHOD**

ELEKTRODENFOLIENTROCKNUNGSVORRICHTUNG, ELEKTRODENFOLIENHERSTELLUNGSSYSTEM DAMIT UND ELEKTRODENFOLIENTROCKNUNGSVERFAHREN

APPAREIL DE SÉCHAGE DE FEUILLE D'ÉLECTRODE, SYSTÈME DE FABRICATION DE FEUILLE D'ÉLECTRODE LE COMPRENANT, ET PROCÉDÉ DE SÉCHAGE DE FEUILLE D'ÉLECTRODE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **27.12.2021 KR 20210188503**

(43) Date of publication of application:
**15.11.2023 Bulletin 2023/46**

(73) Proprietor: **LG Energy Solution, Ltd.**
**Seoul 07335 (KR)**

(72) Inventors:
• **CHOI, Soon Sik**
**Daejeon 34122 (KR)**

• **KWON, Oh Cheol**
**Daejeon 34122 (KR)**
• **KIM, Ji Hwan**
**Daejeon 34122 (KR)**

(74) Representative: **Plasseraud IP**
**104 Rue de Richelieu**
**CS92104**
**75080 Paris Cedex 02 (FR)**

(56) References cited:
CN-A- 112 371 463      CN-U- 204 933 849
JP-A- 2017 036 146      JP-A- 2017 042 704
JP-A- 2021 113 659      JP-A- 2021 114 440
JP-A- H09 161 780      JP-B2- 4 782 549
KR-A- 20110 072 829      KR-A- 20170 094 913
KR-B1- 102 219 165

**Description**

[Technical Field]

This application claims the benefit of priority based on Korean Patent Application No. 10-2021-0188503 filed on November 27, 2021.

The present invention relates to an electrode sheet drying apparatus, an electrode sheet manufacturing system including the same, and an electrode sheet drying method. Specifically, it relates to an electrode sheet drying apparatus that when an electrode sheet is not completely dried in a drying oven in order to prevent over-drying, compensates for an insufficient drying by disposing an air-floating roller downstream of a drying oven, an electrode sheet manufacturing system including the same, and an electrode sheet drying method.

[Background Technology of the Invention]

A lithium secondary battery is equipped with electrodes including an active material exhibiting electrical activity, and these electrodes are manufactured by forming an electrode mixture layer by coating an electrode slurry on a sheet-shaped current collector and drying the electrode mixture layer. For such an electrode manufacturing process, an electrode slurry coating device and an electrode sheet drying device are typically used, and the electrode sheet drying device is equipped with: a drying oven having a hot air supplying part for supplying convective heat in order to dry the mixture layer of the electrode sheet and/or a heater for supplying radiant heat; and transfer rollers that are disposed outside the outlet of the drying oven and move the electrode sheet on which the mixture layer is dried.

In the case of completely drying an electrode sheet in a drying oven after coating an electrode slurry, over-drying may occur, in which the electrode sheet is dried more than necessary, and over-drying may cause thermal creases, cracks, etc. in the electrode sheet, thereby deteriorating the quality of the electrode. Accordingly, there are frequent cases in which, if necessary, the electrode sheet is not completely dried in the drying oven, and the electrode sheet is intentionally discharged from the drying oven in a partially undried state.

However, the electrode sheet in a state in which it is not completely dried may be improved in thermal creases, cracks, etc., but it may contaminate the transfer rollers, and may provide unfavorable conditions for the next processes such as the subsequent rolling process, punching and notching processes, etc.

Therefore, in order to prevent over-drying of the electrode sheet, when the electrode sheet that is not completely dried is discharged from the drying oven and wound up, it is necessary to improve the above problems.

[Description of the Invention]

[Technical Problem]

In the case in which an electrode sheet is not completely dried in a drying oven and is intentionally partially dried in order to prevent over-drying of an electrode sheet, since an electrode sheet in a partially undried state may contaminate equipment such as a transfer roller and/or a rolling roller, etc. used in a subsequent process and may provide unfavorable conditions in a subsequent rolling process, etc., the present invention is directed to improve this.

CN204933849 U discloses an electrode sheet drying device according to the prior art.

JP 2021 114440 A discloses an electrode material drying device. JP 2017 042704 A disclose a coating device comprising an oven. JP 2017 036146 A discloses a web-transporting device which in particular comprises a drying section. JP 4 782549 B2 discloses an electrode sheet drying device. JPv H09 161780 A discloses a drying device for battery plates.

[Technical Solution]

The invention is an electrode sheet drying apparatus according to claim 1 and an electrode sheet drying method according to claim 11.

According to the present invention, an electrode sheet drying apparatus is provided in which includes: a drying oven provided with an internal space for drying an electrode sheet in which an electrode slurry is applied on a current collector; and at least one air-floating rollers disposed downstream of the drying oven and configured to spray a hot air to the electrode sheet, wherein the electrode sheet discharged from the drying oven is partially dried.

According to the present invention, the air-floating roller has a hollow cylindrical shape and has a plurality of air spraying holes on an outer circumferential surface.

According to the invention, the electrode sheet drying apparatus is configured to discharge the electrode sheet from the drying oven in a partially dried state, and the electrode sheet drying apparatus is adapted to adjust the temperature of the hot air sprayed from a single air spraying hole to be 50 to 150 °C.

In an exemplary embodiment of the present invention, a diameter of the air spraying hole may be in the range of 0.5mm to 15mm.

In an exemplary embodiment of the present invention, the air-floating roller may be arranged so that a contact angle with the electrode sheet is 90° or less.

In an exemplary embodiment of the present invention, at least one of the air-floating rollers may be disposed to spray hot air to a first surface of the electrode sheet facing upward in the drying oven.

In an exemplary embodiment of the present invention, at least one of the air-floating rollers may be disposed to spray hot air to a second surface of the electrode sheet facing downward in the drying oven.

In an exemplary embodiment of the present invention, the air-floating roller may include both a first air-floating roller disposed to spray hot air to a first surface of the electrode sheet facing upward in the drying oven and a second air-floating roller disposed to spray hot air to a second surface of the electrode sheet facing downward in the drying oven.

In an exemplary embodiment of the present invention, a suction roller may be disposed downstream of the air-floating roller.

In an exemplary embodiment of the present invention, a partition may be installed around the air-floating roller to block it from an exterior space.

In addition, according to another embodiment of the present invention, an electrode sheet manufacturing system is provided in which includes: a winder continuously unwinding a current collector; a coating part applying an electrode slurry to one surface of the current collector supplied from the winder; the electrode sheet drying apparatus as defined herein disposed downstream of the coating part; and a rewinder winding up an electrode sheet discharged from the electrode sheet drying apparatus.

In addition, according to the present invention, an electrode sheet drying method is provided in which includes: a main drying process of drying an electrode sheet in which an electrode slurry is applied on a current collector in a drying oven; and an additional drying process of additionally drying the electrode sheet being transferred after the main drying process, wherein the additional drying process is performed while the electrode sheet moves on an air-floating roller configured to spray hot air to the electrode sheet.

In the present invention, the main drying process partially dries the electrode sheet so that a solvent removal rate calculated by Equation 1 below is 50% to 98%, Solvent removal rate (%) = (weight of electrode sheet before main drying process - weight of electrode sheet after main drying process) × 100 / (weight of electrode sheet before main drying process - weight of electrode sheet after additional drying process),　　　[Equation 1]

wherein the method implements the electrode sheet drying apparatus according to claim 1, whereby the temperature of the hot air sprayed from a single air spraying hole is 50°C to 150°C.

According to the present invention, the air-floating roller has a hollow cylindrical shape and has a plurality of air spraying holes for spraying hot air on an outer circumferential surface.

In an exemplary embodiment of the present invention, the pressure of the hot air sprayed from a single air spraying hole may be 0.01MPa to 0.5MPa.

According to the present invention, the temperature of the hot air sprayed from a single air spraying hole is 50°C to 150°C.

[Advantageous Effects]

In an electrode sheet drying apparatus and drying method according to the present invention, an air-floating roller is disposed downstream of a drying oven in which a main drying is performed, and the air-floating roller sprays hot air to an electrode sheet that has gone through the main drying, thereby compensating for insufficient drying in the drying oven.

In addition, since an electrode sheet manufacturing system according to the present invention is capable of manufacturing an electrode sheet without cracks and creases because the electrode sheet is not completely dried in the drying oven, and since the air-floating roller compensates for insufficient drying, there is an effect of preventing contamination of subsequent equipment such as transfer rollers or rolling rollers, etc.

[Brief Description of the Drawings]

FIG. 1 is a schematic diagram of an electrode sheet drying apparatus according to an exemplary embodiment of the present invention.

FIG. 2 is a schematic diagram of an air-floating roller according to an exemplary embodiment of the present invention.

FIG. 3 shows various examples and comparative examples of a contact angle between an air-floating roller and an electrode sheet.

FIG. 4 is a diagram showing various arrangements of an air-floating roller, which is one of the components of part A in FIG. 1.

FIG. 5 is a diagram showing a part of a drying apparatus according to an exemplary embodiment of the present invention.

FIG. 6 is a schematic diagram of an electrode sheet drying apparatus according to another embodiment of the present invention.

FIG. 7 is a schematic diagram of an electrode sheet manufacturing system according to an exemplary embodiment of the present invention.

FIG. 8 is a flowchart of an electrode sheet drying method according to an exemplary embodiment of the present invention.

[Reference Numerals]

10: ELECTRODE SHEET
100, 200: DRYING APPARATUS
1000: MANUFACTURING SYSTEM
110, 210: DRYING OVEN
111: INLET 112: OUTLET
113, 213: DRYING MEANS 114,214,122,222: TRANSFER ROLLER
121,221: AIR-FLOATING ROLLER
121a: OUTER CIRCUMFERENTIAL SURFACE, 121b: OPENING, 121c: AIR SPRAYING HOLE
123: TENSION CONTROLLING ROLLER 124: DRIVING ROLLER
130: PARTITION
225: SUCTION ROLLER
200: WINDER
310, 320: COATING PART
400: REWINDER

[Best Mode for Carrying Out the invention]

The terms "comprise" or "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance. In addition, when a part of a layer, a film, a region or a plate is disposed "on" another part, this includes not only a case in which one part is disposed "directly on" another part, but a case in which a third part is interposed therebetween. **In** contrast, when a part of a layer, a film, a region or a plate is disposed "under" another part, this includes not only a case in which one part is disposed "directly under" another part, but a case in which a third part is interposed therebetween. In addition, in this application, "on" may include not only a case of disposed on an upper part but also a case of disposed on a lower part.

In the present specification, the x-axis corresponds to the direction in which the electrode sheet is transferred, the y-axis corresponds to the width direction of the electrode sheet and the column extension direction of the air-floating roller, and the z-axis corresponds to the direction perpendicular to the electrode sheet plane.

Hereinafter, the present invention will be described in more detail.

**Electrode sheet drying apparatus**

An electrode sheet drying apparatus (hereinafter referred to as 'drying apparatus') according to the present invention includes a drying oven provided with an internal space for drying an electrode sheet in which an electrode slurry is applied on a current collector; and at least one or more air-floating rollers disposed downstream of the drying oven and configured to spray hot air to an electrode sheet.

As a method for preventing over-drying of electrode sheets, the temperature inside the drying oven can be controlled, but there are limitations. In order to improve productivity, the transfer speed of the electrode sheet moving inside the drying oven increases, and if the temperature inside the drying oven is set too high in response to the increased transfer speed, over-drying may occur in which only the surface of the electrode slurry is excessively dried.

It can be technically very difficult to ensure that the surface of the electrode slurry and the inside of the electrode slurry are evenly dried through temperature control of the drying oven. A series of processes including monitoring the weight and temperature of the electrode sheet discharged from the drying oven in real time, determining the drying level of the electrode sheet based on the data, and controlling hot air temperature, hot air speed, and heater temperature inside the drying oven according to the determined drying level require a considerable amount of effort.

Accordingly, the electrode sheet is partially dried when being discharged from the drying oven, the drying apparatus of the present invention sets the temperature inside the drying oven to be not too high to prevent over-drying of the surface of the electrode slurry, and disposes an air-floating roller downstream of the drying oven, additionally drying the partially undried state electrode sheet, thereby having an effect of preventing contamination of the transfer roller and/or equipment of the subsequent process.

In addition, the drying apparatus of the present invention does not require considerable amount of effort to control the temperature inside the drying oven, and only needs to additionally install an air-floating roller during the transferring process of the electrode sheet, so it also has an advantage in that no large-scale design changes are required.

**<First Embodiment>**

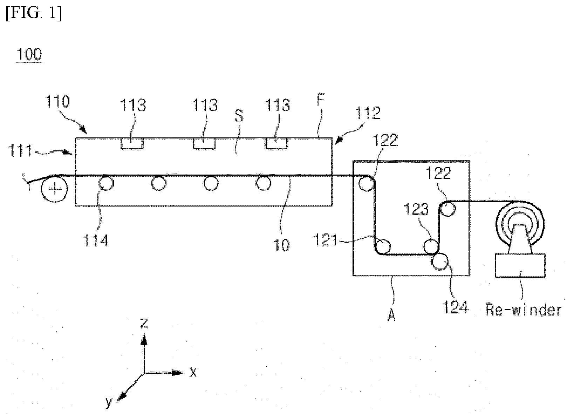

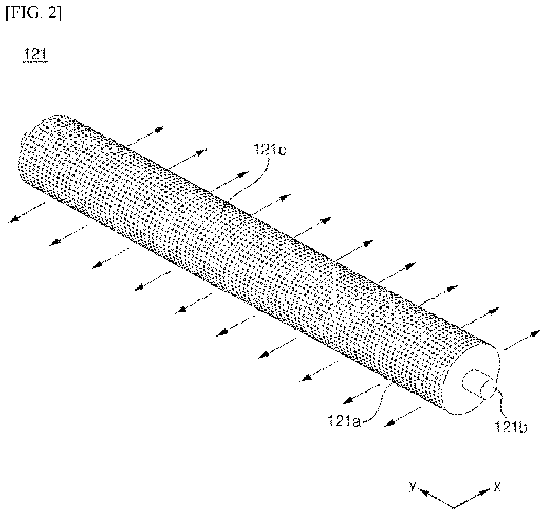

FIG. 1 is a schematic diagram of an electrode sheet drying apparatus according to an exemplary embodiment of the present invention, and FIG. 2 is a schematic diagram of an air-floating roller according to an exemplary embodiment of the present invention.

Referring to these diagrams, the electrode sheet drying apparatus (hereinafter referred to as 'drying apparatus,') 100 according to the present invention includes a drying oven 110 and an air-floating roller 121.

The electrode sheet 10 dried by the drying apparatus 100 of the present invention includes a sheet-type current collector and an electrode slurry applied to one or both sides of the current collector. That is, the electrode sheet 10 of the present invention is manufactured by coating an electrode slurry on one side or both sides of the sheet-type current collector, and the electrode slurry of the electrode sheet 10 prepared in this way is dried by the drying apparatus 100 of the present invention.

The drying oven 110 is provided with an accommodation space S for drying in the inside. In addition, based on the transferring direction (x-axis direction) of the electrode sheet, one side of the drying oven 110 may be provided with an inlet 111 into which the electrode sheet 10 to be dried is put, and the other side may be provided with an outlet 112 from which the electrode sheet 10 subjected to drying that has undergone the drying process can be discharged. The drying oven 110 may include a frame F constituting the outward appearance of the drying oven.

A drying means 113 for drying the electrode slurry is installed inside the drying oven 110, and a specific example of the drying means 113 includes a hot air spraying nozzle for spraying hot air toward the electrode sheet 10 and/or a heater supplying radiant heat. And this heater may be configured to irradiate infrared rays or a laser toward the electrode sheet.

One or more drying means 113 may be installed on the upper part the electrode sheet 10 with respect to the direction perpendicular to the plane of the electrode sheet 10 (z-axis direction). Also, although not shown in FIG. 1, the drying means 113 may be also installed on the lower part of the electrode sheet 10, and in this case, drying efficiency may be increased.

When the drying means 113 is a hot air spraying nozzle, the drying apparatus 100 may further include a heat exchanger (not shown), a blowing fan (not shown), and a duct (not shown) to supply hot air to the hot air spraying nozzle.

The heat exchanger is configured to heat the outside air to be supplied to the hot air spraying nozzle, the blowing fan is configured to blow the outside air heated by the heat exchanger to the hot air spraying nozzle installed inside the drying oven 110 through a duct, and the duct may be configured to be connected to the inside of the accommodation space to supply heated outside air to the inside of the drying oven. In addition, a damper operated by an actuator may be installed inside the duct to control the amount of hot air supplied into the accommodation space through the damper.

The temperature inside the drying oven 110 by this drying means can be set to less than 170°C, preferably 80°C to 150°C, and more preferably 90°C to 130°C.

In addition, one or more transfer rollers 114 for transferring the electrode sheet 10 in the transferring direction (x-axis direction) may be included inside the drying oven 110. The transfer roller 114 may be rotated by a driving part (not shown) that applies a rotational force to the transfer roller 114 to cause the electrode sheet to move in the transferring direction.

The transferring speed of the electrode sheet is 10m/min to 50m/min, specifically 12m/min to 40m/min, or 15m/min to 50m/min, or 20m/min to 40m/min, or 15m/min to 30m/min, or 20m/min to 30m/min.

The air-floating roller 121 is disposed downstream of the drying oven 110, and is configured to spray hot air to the electrode sheet 10. The drying apparatus 100 of the present invention may include at least one or more air-floating roller 121.

The air-floating roller 121 is configured to spray hot air to the electrode sheet 10 discharged from the drying oven, and the electrode sheet 10 on which the electrode slurry is not completely dried can be further dried by the thermal energy of the hot air sprayed from the air-floating roller 121. Accordingly, the drying apparatus 100 according to the present invention can prevent contamination of the transfer roller or the facility of the subsequent process by the electrode slurry that is not completely dried.

Referring to FIG. 2, the air-floating roller 121 according to the present invention has a hollow cylindrical shape, and multiple air spraying holes 121c are formed along the outer circumferential surface 121a. The multiple air spraying holes 121c may be uniformly distributed over the entire outer circumferential surface of the air-floating roller 121, and thus hot air may be sprayed uniformly over the entire surface of the electrode sheet.

The diameter of a single air spraying hole may be 0.5 to 15mm, preferably 1mm to 10mm, and more preferably 3mm to 7mm. When the diameter of the air spraying hole is within the above numerical range, hot air of appropriate pressure can be sprayed to the electrode sheet, which is preferable.

The length of the air-floating roller 121 in the column extension direction (y-axis direction) may correspond to the length of the electrode sheet 10 in the width direction (y-axis direction). In addition, one side in the column extension direction (y-axis direction) of the air-floating roller 121 may be formed with an opening 121b for supplying hot air to the inner space of the air-floating roller 121, and the other side in the column extension direction (y-axis direction) of the air-floating roller 121 may have a closed structure.

The drying apparatus 100 of the present invention may include a hot air supplying part (not shown) for supplying hot air to the air-floating roller 121, and the hot air supplying part may be configured to be connected to the opening 121b to supply hot air to the inside of the air-floating roller 121. Also, since the hot air supplying part supplies hot air to the inside of the air-floating roller, the hot air may be sprayed toward the electrode sheet 10 through the air spraying hole 121c.

The hot air supplying part may include an air blower (not shown) that generates hot air, and the air blower may include a motor that provides a driving force and an impeller that rotates by the driving of the motor. In addition, besides the air blower, the hot air supplying part may further include an air compressor and an air control unit for controlling air flow rate and pressure.

The air-floating roller 121 configured as described above may spray a high-pressure hot air toward the electrode sheet 10 through a plurality of air spraying holes formed on the outer circumferential surface.

In one specific example, the air-floating roller 121 may be disposed such that a contact angle with the electrode sheet 10 is 90° or less. Here, the contact angle between the air-floating roller 121 and the electrode sheet 10 may be defined as an interior angle formed between the electrode sheet 10 immediately before moving on the air-floating roller 121 and the electrode sheet 10 immediately after moving on the air-floating roller 121.

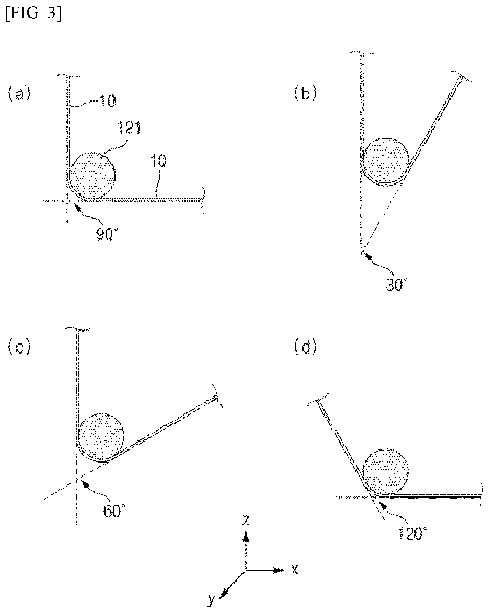

FIG. 3 shows various examples and comparative examples of the contact angle between the air-floating roller and the electrode sheet. (a) of FIG. 3 shows the case where the contact angle between the air-floating roller and the electrode sheet is 90°, (b) of FIG. 3 shows the case where the contact angle between the air-floating roller and the electrode sheet is 30°, (c) of FIG. 3 shows the case where the contact angle between the air-floating roller and the electrode sheet is 60°, and (d) of FIG. 3 shows a case where the contact angle between the air-floating roller and the electrode sheet is 120°. As shown in these diagrams, it can be confirmed that the contact area of the electrode sheet 10 and the air-floating roller 121 increases as the size of the contact angle decreases.

The larger the contact area of the electrode sheet 10 with the air-floating roller 121, the more favorable the transfer of heat energy by the air-floating roller 121, so in disposing the air-floating roller 121, it is preferable that the air-floating roller 121 may be arranged so that the contact angle with the electrode sheet 10 is 90° or less.

The size of the contact angle formed between the air-floating roller 121 and the electrode sheet 10 may be adjusted by adjusting the position of the transfer roller (or guide roller) disposed right in front of the air-floating roller 121 and the transfer roller (or guide roller) disposed right behind the air-floating roller 121 with respect to the transferring direction (x-axis direction) of the electrode sheet.

As shown in (a) of FIG. 3, when the transfer roller (or guide roller) to be positioned right in front of the air-floating roller 121 is disposed on the upper part in the vertical direction (z-axis direction) with respect to the air-floating roller 121, and when the transfer roller (or guide roller) to be positioned right behind the air-floating roller 121 is disposed on the right side in the horizontal direction (x-axis direction) with respect to the air-floating roller 121, the contact angle may be 90°.

In addition, as shown in (b) and (c) of FIG. 3, when the transfer roller (or guide roller) to be positioned right in front of the air-floating roller 121 is disposed on the upper part in the vertical direction (z-axis direction) with respect to the air-floating roller 121, and when the transfer roller (or guide roller) to be positioned right behind the air-floating roller 121 is disposed on the upper right side with respect to the air-floating roller 121, the contact angle may be less than 90°.

In addition, as shown in (d) of FIG. 3, when the transfer roller (or guide roller) to be positioned right in front of the air-floating roller 121 is disposed on the left upper part with respect to the air-floating roller 121, and when the transfer roller (or guide roller) to be positioned right behind the air-floating roller 121 is disposed on the right side in the horizontal direction (x-axis direction) with respect to the air-floating roller 121, the contact angle may exceed 90°.

According to one embodiment of the present invention, at least one of the air-floating rollers may be disposed to spray hot air to the first surface of the electrode sheet facing upward in the drying oven.

Moreover, according to another embodiment of the present invention, at least one of the air-floating rollers may be disposed to spray hot air to the second surface of the electrode sheet facing downward in the drying oven.

In addition, according to another embodiment of the present invention, the air-floating roller may include both the first air-floating roller disposed to spray hot air to the first surface of the electrode sheet facing upward in the drying oven and the second air-floating roller disposed to spray hot air to the second surface of the electrode sheet facing downward in the drying oven.

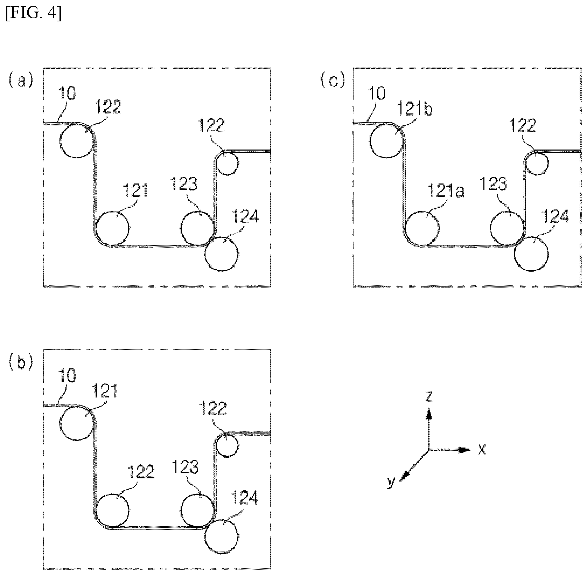

FIG. 4 is a diagram showing various arrangements of an air-floating roller, which is one of the components of part A in FIG. 1. Referring to FIG. 1 and FIG. 4, the drying means 113 for supplying hot air and/or radiant heat to the electrode sheet may be installed on the ceiling of the frame F constituting the outward appearance of the drying oven 110. Since the electrode slurry constituting the electrode sheet 10 is a fluid, the electrode sheet 10 is transferred into the drying oven 110 with the electrode slurry-coated portion facing the drying means 113. Among the two surfaces of the electrode sheet 10, if the surface facing the drying means 113 is referred to as the first surface, drying of the first surface facing upward is performed in the drying oven 110. That is, the electrode sheet is put in and out of the drying oven 110 with the first surface of the electrode sheet facing upward and the second surface opposite to the first surface of the electrode sheet facing downward.

The electrode sheet 10 discharged from the drying oven 110 in an intentionally and partially undried state is additionally dried by the air-floating roller 121, and based on the arrangement order of the air-floating roller 121, the surface of the electrode sheet facing the air-floating roller 121 can be selected.

Specifically, as shown in (a) of FIG. 4, when the arrangement is in the order of transfer roller 122, air-floating roller 121, and transfer roller 122 along the transferring direction of the electrode sheet 10, the first surface of the electrode sheet comes into contact with the air-floating roller 121. In this case, the air-floating roller 121 sprays ultra-high pressure hot air to prevent contamination by a partially undried state electrode slurry, so that the electrode sheet 10 can pass through the air-floating roller 121 in a state in which it floats on the air-floating roller 121.

And, as shown in (b) of FIG. 4, when the arrangement is in the order of air-floating roller 121 and transfer roller 122 along the transferring direction of the electrode sheet 10, the second surface of the electrode sheet 10 comes into contact with the air-floating roller 121. In this case, since the second surface of the electrode sheet 10 is a current collector and cannot contaminate the air-floating roller 121, the air-floating roller 121 may spray high-pressure hot air to the electrode sheet 10 to additionally dry the first surface of the electrode sheet 10. In a conventional drying oven 110, the electrode slurry of the electrode sheet is dried in order from the surface to the vicinity of the current collector. When an air-floating roller is disposed as shown in (b) of FIG. 4, hot air is sprayed on the second surface of the electrode sheet 10, so there is an effect of efficiently additionally drying the electrode slurry near the current collector that has not been dried due to the difference in drying speed.

And, as shown in (c) of FIG. 4, when the arrangement is in the order of second air-floating roller 121b, first air-floating roller 121a, and transfer roller 122 along the transferring direction of the electrode sheet 10, the second surface of the electrode sheet 10 comes into contact with the second air-floating roller 121b, and the first surface of the electrode sheet comes into contact with the first air-floating roller 121a.

Although (a) of FIG. 4 and (b) of FIG. 4 illustrate the air-floating roller 121 being single, this is only a diagram for briefly explaining the arrangement order of the air-floating roller and the transfer roller, and two or more air-floating rollers may be installed in the order in which the air-floating rollers are arranged.

In one specific example, the drying apparatus 100 according to the present invention may dispose a tension controlling roller 123 and a driving roller 124 downstream of the air-floating roller 121 to control the transferring tension of the electrode sheet 10.

The driving roller 124 is capable of self-rotation, and the tension controlling roller 123 is a non-driving roller that cannot rotate by itself, and the driving roller 124 and the tension controlling roller 123 can be designed to face each other in pairs.

The driving roller 124 may be located in the lower part of the electrode sheet 10, and the tension controlling roller 123 may be located in the upper part of the electrode sheet 10. And when the electrode sheet 10 passes between the driving roller 124 and the tension controlling roller 123, a tension can be applied to the electrode sheet 10 due to the difference between the movement speeds of the driving roller and the tension controlling roller.

In the electrode sheet drying apparatus of the present invention, electrode sheets in a state that are not completely dried are discharged from the drying oven 110, and if a tension is not applied to the electrode sheets, there is a possibility that creases may occur in the electrode sheets in partially undried portions. As the drying apparatus according to the present invention includes the tension controlling roller 123 and the driving roller 124, there is an effect of controlling the possibility of creasing.

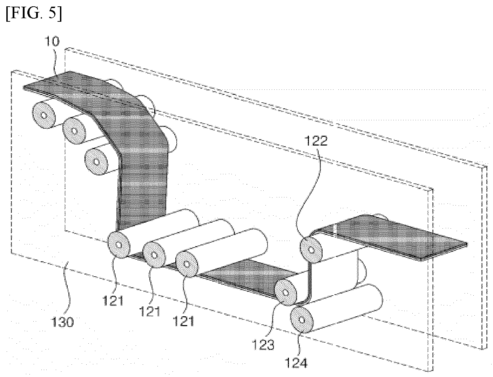

FIG. 5 is a diagram showing a part of a drying apparatus according to an exemplary embodiment of the present invention.

Referring to FIG. 5, the drying apparatus 100 according to the present invention may have a partition 130 installed around the air-floating roller 121 in order to block it from an exterior space. The partition 130 can reduce heat energy loss of the hot air sprayed from the air-floating roller, thereby increasing the efficiency of additional drying.

The partition 130 may be disposed side by side in the transferring direction (x-axis direction) of the electrode sheet 10 by forming pairs with the air-floating roller interposed therebetween.

**<Second Embodiment>**

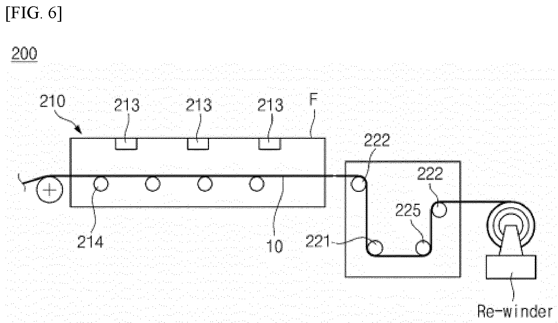

FIG. 6 is a schematic diagram of an electrode sheet drying apparatus according to another embodiment of the present invention. Referring to FIG. 6, the drying apparatus 200 according to the present invention includes a drying oven 210, an air-floating roller 221, and a suction roller 225.

Since the drying oven 210 and the air-floating roller 221 have been described in detail above, a detailed description thereof will be omitted.

The drying apparatus 200 according to the second embodiment has the suction roller 225 disposed downstream of the air-floating roller 221.

In one specific example, the suction roller 225 may be a driving roller capable of rotational movement by itself, and therefore, a tension may be applied to the electrode sheet depending on the difference between the rotational speed of the suction roller 225 and the rotational speed of the transfer roller 222 located downstream of the suction roller 225.

In addition, since the suction roller 225 brings the electrode sheet into close contact with the suction roller, it allows the electrode sheet to move on the suction roller 225 without being lifted and to move in the correct position. In particular, when the electrode sheet 10 moves on the air-floating roller 221, the position of the electrode sheet 10 may wobble due to an external force caused by hot air, but since the suction roller 225 disposed downstream of the air-floating roller 221 absorbs the electrode sheet 10, the drying apparatus 200 according to the present invention has an effect of applying an appropriate tension to the electrode sheet 10 being transferred as well as preventing the electrode sheet from meandering.

In one specific example, the suction roller 225 has a cylindrical shape, and multiple perforated holes or slits for absorbing the electrode sheet onto the suction roller 225 may be formed on the outer circumferential surface. In addition, multiple perforated holes or slits may be evenly distributed over the entire outer circumferential surface of the suction roller 225.

A through hole is provided inside the suction roller 225, and when a vacuum is applied to the inside of the suction roller 225 through the through hole, the outside air is introduced into the inside due to a pressure difference between the inside of the suction roller 225 and the outside of the suction roller 225, thereby the electrode sheet 10 moving on the suction roller 225 may be absorbed to the outer circumferential surface of the suction roller 225.

The shape of the perforated hole is not particularly limited, but may be one or more selected from circular, elliptical, and polygonal shapes.

During absorption through vacuum application, it is preferable that the area of the perforated hole or the slit is small in order not to damage the electrode sheet. The length of each major diameter of the perforated hole or the slit may be 0.1mm to 10mm, preferably 0.2mm to 7.5mm, and more preferably 0.5mm to 5mm.

The drying apparatus 200 of the present invention may further include a vacuum pump (not shown) in order to apply a vacuum to the through hole inside the suction roller 225.

**Electrode sheet manufacturing system**

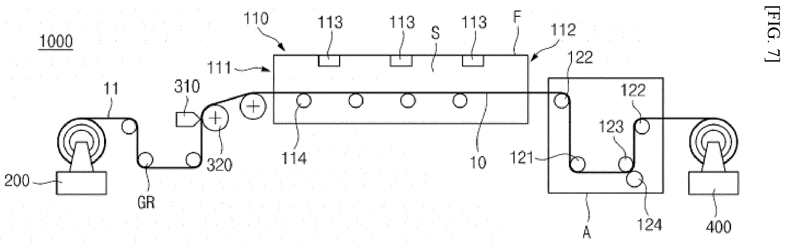

FIG. 7 is a schematic diagram of an electrode sheet manufacturing system (hereinafter referred to as "manufacturing system') according to an exemplary embodiment of the present invention. Referring to FIG. 7, the manufacturing system 1000 of the present invention includes a winder 200, a coating part 300, a drying apparatus 100, and a rewinder 400.

The manufacturing system 1000 of the present invention as described above may sequentially perform the following processes: a coating process of applying an electrode slurry on a sheet-type current collector; a main drying process of drying an electrode sheet on which an electrode slurry is applied in a drying oven; an additional drying process of additionally drying an electrode sheet that has gone through the main drying process; and a winding process of winding an electrode sheet that has gone through the drying process into a roll shape.

The winder 200 may be configured to continuously unwind the current collector 11 wound into a roll shape and supply it to the coating part.

The coating part 310, 320 may be configured to apply the electrode slurry to one surface of the current collector supplied from the winder. The coating part may include: a coater 310 configured to discharge an electrode slurry onto a current collector through a discharge port; and a coating roller 320 paired with the coater 310 and installed at a position facing the coater to transfer the current collector while supporting it.

The drying apparatus 100 is for drying the electrode slurry applied by the coating part, and includes a drying oven 110 configured to perform main drying and an air-floating roller 121 for additional drying, and the details thereof are the same as described above.

The rewinder 400 may be configured to wind the electrode sheet 10 discharged from the drying apparatus 100 in a roll shape.

A manufacturing system having such a configuration can be applied to a manufacturing system of a single-sided electrode in which an electrode slurry is applied to one surface of a current collector.

A manufacturing system for a double-sided electrode in which an electrode slurry is applied to both surfaces of a current collector may further include a coating part and a drying apparatus to the above manufacturing system. That is, it may include: a winder that continuously unwinds a current collector; a first coating part for applying an electrode slurry to one surface of a current collector supplied from the winder; a first drying apparatus disposed downstream of a first coating part; a second coating part for applying an electrode slurry to the other surface of a current collector discharged from the first drying apparatus; a second drying apparatus disposed downstream of the second coating part; and a rewinder winding an electrode sheet discharged from the second drying apparatus in a roll shape.

Since the manufacturing system of the present invention as described above includes a drying oven configured to perform main drying, and an air-floating roller configured to perform additional drying, and accordingly, since it discharges an electrode sheet in a partially undried state from the drying oven to prevent cracks and creases that may be caused by over-drying from occurring, and allows the air-floating roller to completely dry the electrode sheet, there is an effect of preventing contamination of the transfer roller or the equipment of the subsequent process.

### Electrode sheet drying method

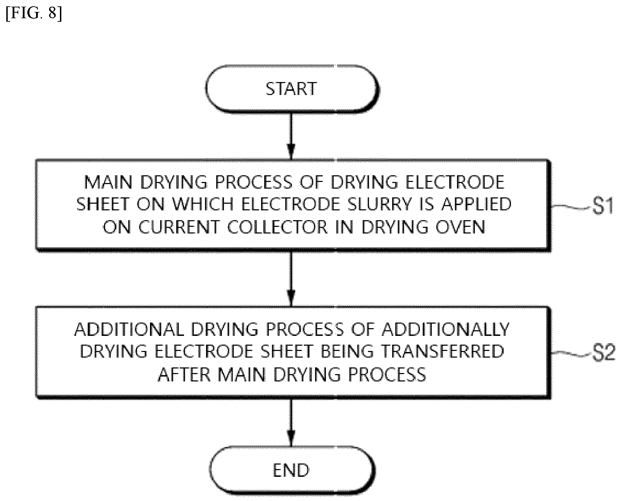

FIG. 8 is a flowchart of an electrode sheet drying method according to an exemplary embodiment of the present invention. Referring to FIG. 8, the electrode sheet drying method according to the present invention includes: a main drying process S1 of drying an electrode sheet in which an electrode slurry is applied on a current collector in a drying oven; and an additional drying process S2 of additionally drying the electrode sheet being transferred after a main drying process.

The drying method of the present invention is a two-step drying method including both a main drying process S1 and an additional drying process S2, and may use the above-described drying apparatus 100, 200. Specifically, the main drying process S1 may be performed by the drying oven, and the additional drying process S2 may be performed by the air-floating roller. The additional drying process S2 may be performed while the electrode sheet moves on the air-floating roller configured to spray hot air to the electrode sheet.

The main drying process S1 and the additional drying process S2 are continuous processes, and the main drying process S1 and the additional drying process S2 may be continuously performed on the electrode sheet being transferred.

Here, the transferring speed of the electrode sheet may be 10m/min to 50m/min, specifically 12m/min to 40m/min, or 15m/min to 50m/min, or 20m/min to 40m/min, or 15m/min to 30m/min, or 20m/min to 30m/min.

The main drying process S1 may be a process of drying the electrode sheet but removing a significant amount of solvent from the electrode slurry to such an extent that over-drying does not occur, and the additional drying process S2 may be a process of compensating for an insufficient drying.

Accordingly, the drying method according to the present invention has an effect of enabling complete drying of the electrode sheet before winding of the electrode sheet, as well as reducing the occurrence of cracks due to over-drying.

In the electrode sheet drying method according to an exemplary embodiment of the present invention, the main drying process may be a process of partially drying the electrode sheet so that the solvent removal rate calculated by Equation 1 below is 50% to 98%, preferably 60% to 96%, and more preferably 70% to 95%. When the solvent removal rate is within the above range, the transfer speed of the electrode sheet does not decrease, which is preferable in terms of productivity.

Solvent removal rate (%) = (weight of electrode sheet before main drying process - weight of electrode sheet after main drying process) $\times$ 100 / (weight of electrode sheet before main drying process - weight of electrode sheet after additional drying process)     [Equation 1]

In addition, in the main drying process S1, the drying temperature may be set to less than 170°C, preferably 80°C to 150°C, and more preferably 90°C to 130°C.

In one specific example, the air-floating roller may have a hollow cylindrical shape, and may have a structure in which a plurality of air spraying holes for spraying hot air are provided on the outer circumferential surface.

The pressure of hot air sprayed from a single air spraying hole may be adjusted to 0.01MPa to 0.5MPa, more specifically 0.01MPa to 0.4MPa; 0.01MPa to 0.3MPa; 0.01MPa to 0.2MPa; 0.01MPa to 0.1MPa; 0.05MPa to 0.2MPa; 0.1MPa to 0.5MPa; 0.2MPa to 0.4MPa; 0.01MPa to 0.09MPa; or 0.05MPa to 0.09MPa.

In addition, the temperature of the hot air sprayed through the air spraying hole is 50°C to 150°C, more specifically 60°C to 140°C; or 80°C to 120°C.

In the present invention, in order to increase the effect of compensating for drying by the air-floating roller, it is preferable that the area of the air-floating roller facing the electrode sheet is larger. Therefore, in one specific example, the smaller the contact angle between the air-floating roller and the electrode sheet, the larger the area of the air-floating roller facing the electrode sheet, so it is preferable that the contact angle between the air-floating roller and the electrode sheet is smaller than or equal to 90°.

The scope of protection of the present invention should be interpreted by the claims.

**Claims**

1. An electrode sheet drying apparatus (100, 200), comprising:

   a drying oven (110, 210) provided with an internal space (S) for drying an electrode sheet (10) in which an electrode slurry is applied on a current collector; and
   at least one air-floating rollers (121, 221) disposed downstream of the drying oven (110, 210) and configured to spray hot air to the electrode sheet (10) discharged from the drying oven (110, 210),
   wherein the air-floating roller (121, 221) has a hollow cylindrical shape and has a plurality of air spraying holes (121c) on an outer circumferential surface (121a),
   wherein the electrode sheet drying apparatus (100, 200) is configured to discharge the electrode sheet (10) from the drying oven (110, 210) in a partially dried state,
   **characterized in that** the electrode sheet drying apparatus (100, 200) is adapted to adjust the temperature of the hot air sprayed from a single air spraying hole (121c) to be 50 to 150 °C.

2. The electrode sheet drying apparatus (100) of claim 1, wherein one side in the column extension direction of the air-floating roller (121) is formed with an opening (121b) for supplying hot air to an inner space of the air-floating roller (121), and another side in the column extension direction of the air-floating roller (121) has a closed structure, the drying apparatus (100) further including a hot air supplying part for supplying hot air to the air-floating roller (121), wherein the hot air supplying part connected to the opening (121b) to supply hot air to the inside of the air-floating roller (121).

3. The electrode sheet drying apparatus (100, 200) of claim 1, wherein
   a diameter of the air spraying hole (121c) is in the range of 0.5mm to 15mm.

4. The electrode sheet drying apparatus of claim 1, wherein
   the air-floating roller (121, 221) is arranged so that a contact angle with the electrode sheet (10) is 90° or less.

5. The electrode sheet drying apparatus (100, 200) of claim 1, wherein
   at least one of the air-floating rollers (121, 221) is disposed to spray hot air to a first surface of the electrode sheet (10) facing upward in the drying oven (110, 210).

6. The electrode sheet drying apparatus of claim 1, wherein
   at least one of the air-floating rollers (121, 221) is disposed to spray hot air to a second surface of the electrode sheet (10) facing downward in the drying oven (110, 210).

7. The electrode sheet drying apparatus of claim 1, wherein
   the air-floating roller (121, 221) comprises both a first air-floating roller disposed to spray hot air to a first surface of the electrode sheet (10) facing upward in the drying oven (110, 210) and a second air-floating roller disposed to spray hot air to a second surface of the electrode sheet (10) facing downward in the drying oven (110, 210).

8. The electrode sheet drying apparatus (200) of claim 1, wherein
   a suction roller (225) is disposed downstream of the air-floating roller (221).

9. The electrode sheet drying apparatus of claim 1, wherein
   a partition (130) is installed around the air-floating roller (121, 221) to block it from an exterior space.

10. An electrode sheet manufacturing system (1000), comprising:

    a winder (200) continuously unwinding a current collector;
    a coating part applying an electrode slurry to one surface of the current collector supplied from the winder (200); and

a rewinder (400) winding up an electrode sheet (10) discharged from the electrode sheet drying apparatus (100, 200);

**characterized in that** an electrode sheet drying apparatus (100, 200) according to claim 1 is disposed downstream of the coating part.

11. An electrode sheet drying method comprising:

a main drying process of drying an electrode sheet (10) in which an electrode slurry is applied on a current collector in a drying oven (110, 210); and

an additional drying process of additionally drying the electrode sheet (10) being transferred after the main drying process, wherein

the additional drying process is performed while the electrode sheet (10) moves on an air-floating roller (121, 221) configured to spray hot air to the electrode sheet (10),

wherein the main drying process partially dries the electrode sheet (10) so that a solvent removal rate calculated by Equation 1 below is 50% to 98%, Solvent removal rate (%) = (weight of electrode sheet before main drying process - weight of electrode sheet after main drying process) $\times$ 100 / (weight of electrode sheet before main     [Equation 1] drying process - weight of electrode sheet after additional drying process),

**characterized in that** the method implements the electrode sheet drying apparatus (100, 200) according to claim 1, whereby the temperature of the hot air sprayed from a single air spraying hole (121c) is 50°C to 150°C.

12. The electrode sheet drying method of claim 11, wherein
the air-floating roller (121, 221) has a hollow cylindrical shape and has a plurality of air spraying holes (121c) for spraying hot air on an outer circumferential surface (121a).

13. The electrode sheet drying method of claim 12, wherein
the pressure of the hot air sprayed from a single air spraying hole (121c) is 0.01MPa to 0.5MPa.


**Patentansprüche**

1. Elektrodenfolien-Trocknungsvorrichtung (100, 200), umfassend:

einen Trockenofen (110, 210), der mit einem Innenraum (S) zum Trocknen einer Elektrodenfolie (10) versehen ist, bei der eine Elektrodenaufschlämmung auf einen Stromkollektor aufgetragen ist; und

mindestens eine Luftschwebewalze (121, 221), die stromabwärts des Trockenofens (110, 210) angeordnet und dazu konfiguriert ist, Heißluft auf die aus dem Trockenofen (110, 210) ausgetragene Elektrodenfolie (10) zu sprühen,

wobei die Luftschwebewalze (121, 221) eine hohlzylindrische Form aufweist und eine Vielzahl von Luftsprühlöchern (121c) an einer äußeren Umfangsfläche (121a) aufweist,

wobei die Elektrodenfolien-Trocknungsvorrichtung (100, 200) dazu konfiguriert ist, die Elektrodenfolie (10) in einem teilweise getrockneten Zustand aus dem Trockenofen (110, 210) auszutragen,

**dadurch gekennzeichnet, dass** die Elektrodenfolien-Trocknungsvorrichtung (100, 200) dazu eingerichtet ist, die Temperatur der aus einem einzelnen Luftsprühloch (121c) gesprühten Heißluft auf 50 bis 150 °C einzustellen.

2. Elektrodenfolien-Trocknungsvorrichtung (100) gemäß Anspruch 1, wobei eine Seite in der Säulenerstreckungsrichtung der Luftschwebewalze (121) mit einer Öffnung (121b) zum Zuführen von Heißluft zu einem Innenraum der Luftschwebewalze (121) ausgebildet ist, und eine andere Seite in der Säulenerstreckungsrichtung der Luftschwebewalze (121) eine geschlossene Struktur aufweist, wobei die Trocknungsvorrichtung (100) ferner ein Heißluftzuführteil zum Zuführen von Heißluft zu der Luftschwebewalze (121) umfasst, wobei das Heißluftzuführteil mit der Öffnung (121b) verbunden ist, um Heißluft in das Innere der Luftschwebewalze (121) zuzuführen.

3. Elektrodenfolien-Trocknungsvorrichtung (100, 200) gemäß Anspruch 1, wobei
ein Durchmesser des Luftsprühlochs (121c) im Bereich von 0,5 mm bis 15 mm liegt.

4.  Elektrodenfolien-Trocknungsvorrichtung gemäß Anspruch 1, wobei
    die Luftschwebewalze (121, 221) so angeordnet ist, dass ein Kontaktwinkel mit der Elektrodenfolie (10) 90° oder weniger beträgt.

5.  Elektrodenfolien-Trocknungsvorrichtung (100, 200) gemäß Anspruch 1, wobei
    mindestens eine der Luftschwebewalzen (121, 221) angeordnet ist, um Heißluft auf eine erste Oberfläche der Elektrodenfolie (10) zu sprühen, die im Trockenofen (110, 210) nach oben weist.

6.  Elektrodenfolien-Trocknungsvorrichtung gemäß Anspruch 1, wobei
    mindestens eine der Luftschwebewalzen (121, 221) angeordnet ist, um Heißluft auf eine zweite Oberfläche der Elektrodenfolie (10) zu sprühen, die im Trockenofen (110, 210) nach unten weist.

7.  Elektrodenfolien-Trocknungsvorrichtung gemäß Anspruch 1, wobei
    die Luftschwebewalze (121, 221) sowohl eine erste Luftschwebewalze, die angeordnet ist, um Heißluft auf eine erste Oberfläche der Elektrodenfolie (10) zu sprühen, die im Trockenofen (110, 210) nach oben weist, als auch eine zweite Luftschwebewalze umfasst, die angeordnet ist, um Heißluft auf eine zweite Oberfläche der Elektrodenfolie (10) zu sprühen, die im Trockenofen (110, 210) nach unten weist.

8.  Elektrodenfolien-Trocknungsvorrichtung (200) gemäß Anspruch 1, wobei
    eine Saugwalze (225) stromabwärts der Luftschwebewalze (221) angeordnet ist.

9.  Elektrodenfolien-Trocknungsvorrichtung gemäß Anspruch 1, wobei
    eine Trennwand (130) um die Luftschwebewalze (121, 221) herum installiert ist, um sie von einem Außenraum abzuschirmen.

10. Elektrodenfolien-Herstellungssystem (1000), umfassend:

    eine Wickeleinheit (200), die kontinuierlich einen Stromkollektor abwickelt;
    ein Beschichtungsteil, das eine Elektrodenaufschlämmung auf eine Oberfläche des von der Wickeleinheit (200) zugeführten Stromkollektors aufträgt; und
    eine Aufwickeleinheit (400), die eine aus der Elektrodenfolien-Trocknungsvorrichtung (100, 200) ausgetragene Elektrodenfolie (10) aufwickelt;
    **dadurch gekennzeichnet, dass** eine Elektrodenfolien-Trocknungsvorrichtung (100, 200) gemäß Anspruch 1 stromabwärts des Beschichtungsteils angeordnet ist.

11. Elektrodenfolien-Trocknungsverfahren, umfassend:

    einen Haupttrocknungsprozess eines Trocknens einer Elektrodenfolie (10), bei dem eine Elektrodenaufschlämmung auf einen Stromkollektor in einem Trockenofen (110, 210) aufgetragen wird; und
    einen zusätzlichen Trocknungsprozess eines zusätzlichen Trocknens der Elektrodenfolie (10), die nach dem Haupttrocknungsprozess transferiert wird, wobei
    der zusätzliche Trocknungsprozess durchgeführt wird, während sich die Elektrodenfolie (10) auf einer Luftschwebewalze (121, 221) bewegt, die dazu konfiguriert ist, Heißluft auf die Elektrodenfolie (10) zu sprühen, wobei der Haupttrocknungsprozess die Elektrodenfolie (10) teilweise trocknet, sodass eine gemäß der nachstehenden Gleichung 1 berechnete Lösungsmittelentfernungsrate 50% bis 98% beträgt, [Gleichung 1] Lösungsmittelentfernungsrate (%) = (Gewicht der Elektrodenfolie vor dem Haupttrocknungsprozess - Gewicht der Elektrodenfolie nach dem Haupttrocknungsprozess) x 100 / (Gewicht der Elektrodenfolie vor dem Haupttrocknungsprozess - Gewicht der Elektrodenfolie nach dem zusätzlichen Trocknungsprozess),     [Gleuichung 1]

    **dadurch gekennzeichnet, dass** das Verfahren die Elektrodenfolien-Trocknungsvorrichtung (100, 200) gemäß Anspruch 1 verwendet, wobei die Temperatur der aus einem einzelnen Luftsprühloch (121c) gesprühten Heißluft 50°C bis 150°C beträgt.

12. Elektrodenfolien-Trocknungsverfahren gemäß Anspruch 11, wobei
    die Luftschwebewalze (121, 221) eine hohlzylindrische Form aufweist und eine Vielzahl von Luftsprühlöchern (121c) zum Sprühen von Heißluft an einer äußeren Umfangsfläche (121a) aufweist.

**13.** Elektrodenfolien-Trocknungsverfahren gemäß Anspruch 12, wobei der Druck der aus einem einzelnen Luftsprühloch (121c) gesprühten Heißluft 0,01 MPa bis 0,5 MPa beträgt.

**Revendications**

**1.** Appareil de séchage de feuille d'électrode (100, 200), comprenant :

une étuve de séchage (110, 210) dotée d'un espace interne (S) pour sécher une feuille d'électrode (10) dans laquelle une suspension d'électrode est appliquée sur un collecteur de courant ; et
au moins un rouleau flottant à air (121, 221) disposé en aval de l'étuve de séchage (110, 210) et configuré pour pulvériser de l'air chaud sur la feuille d'électrode (10) déchargée de l'étuve de séchage (110, 210),
dans lequel le rouleau flottant à air (121, 221) présente une forme cylindrique creuse et présente une pluralité de trous de pulvérisation d'air (121c) sur une surface circonférentielle externe (121a),
dans lequel l'appareil de séchage de feuille d'électrode (100, 200) est configuré pour décharger la feuille d'électrode (10) de l'étuve de séchage (110, 210) dans un état partiellement sec,
**caractérisé en ce que** l'appareil de séchage de feuille d'électrode (100, 200) est adapté pour ajuster la température de l'air chaud pulvérisé à partir d'un trou de pulvérisation d'air unique (121c) pour qu'elle soit de 50 à 150 °C.

**2.** Appareil de séchage de feuille d'électrode (100) selon la revendication 1, dans lequel un côté dans la direction d'extension de colonne du rouleau flottant à air (121) est formé avec une ouverture (121b) pour alimenter en air chaud un espace interne du rouleau flottant à air (121), et un autre côté dans la direction d'extension de colonne du rouleau flottant à air (121) présente une structure fermée, l'appareil de séchage (100) comportant en outre une partie d'alimentation en air chaud pour alimenter en air chaud le rouleau flottant à air (121), dans lequel la partie d'alimentation en air chaud est reliée à l'ouverture (121b) pour alimenter en air chaud l'intérieur du rouleau flottant à air (121).

**3.** Appareil de séchage de feuille d'électrode (100, 200) selon la revendication 1, dans lequel un diamètre du trou de pulvérisation d'air (121c) est dans la plage de 0,5 mm à 15 mm.

**4.** Appareil de séchage de feuille d'électrode selon la revendication 1, dans lequel le rouleau flottant à air (121, 221) est agencé de sorte qu'un angle de contact avec la feuille d'électrode (10) soit de 90° ou moins.

**5.** Appareil de séchage de feuille d'électrode (100, 200) selon la revendication 1, dans lequel au moins un des rouleaux flottants à air (121, 221) est disposé pour pulvériser de l'air chaud sur une première surface de la feuille d'électrode (10) orientée vers le haut dans l'étuve de séchage (110, 210).

**6.** Appareil de séchage de feuille d'électrode selon la revendication 1, dans lequel au moins un des rouleaux flottants à air (121, 221) est disposé pour pulvériser de l'air chaud sur une deuxième surface de la feuille d'électrode (10) orientée vers le bas dans l'étuve de séchage (110, 210).

**7.** Appareil de séchage de feuille d'électrode selon la revendication 1, dans lequel le rouleau flottant à air (121, 221) comprend à la fois un premier rouleau flottant à air disposé pour pulvériser de l'air chaud sur une première surface de la feuille d'électrode (10) orientée vers le haut dans l'étuve de séchage (110, 210) et un deuxième rouleau flottant à air disposé pour pulvériser de l'air chaud sur une deuxième surface de la feuille d'électrode (10) orientée vers le bas dans l'étuve de séchage (110, 210).

**8.** Appareil de séchage de feuille d'électrode (200) selon la revendication 1, dans lequel un rouleau d'aspiration (225) est disposé en aval du rouleau flottant à air (221).

**9.** Appareil de séchage de feuille d'électrode selon la revendication 1, dans lequel une cloison (130) est installée autour du rouleau flottant à air (121, 221) pour le séparer d'un espace extérieur.

**10.** Système de fabrication de feuille d'électrode (1000), comprenant :

un enrouleur (200) déroulant en continu un collecteur de courant ;
une partie de revêtement appliquant une suspension d'électrode sur une surface du collecteur de courant fourni par l'enrouleur (200) ; et
un réenrouleur (400) enroulant une feuille d'électrode (10) déchargée de l'appareil de séchage de feuille d'électrode (100, 200) ;
**caractérisé en ce qu'**un appareil de séchage de feuille d'électrode (100, 200) selon la revendication 1 est disposé en aval de la partie de revêtement.

11. Procédé de séchage de feuille d'électrode comprenant :

un processus de séchage principal consistant à sécher une feuille d'électrode (10) dans laquelle une suspension d'électrode est appliquée sur un collecteur de courant dans une étuve de séchage (110, 210) ; et
un processus de séchage supplémentaire consistant à soumettre à un séchage supplémentaire la feuille d'électrode (10) transférée après le processus de séchage principal, dans lequel
le processus de séchage supplémentaire est réalisé pendant que la feuille d'électrode (10) se déplace sur un rouleau flottant à air (121, 221) configuré pour pulvériser de l'air chaud sur la feuille d'électrode (10),
dans lequel le processus de séchage principal sèche partiellement la feuille d'électrode (10) de sorte qu'un taux d'élimination de solvant calculé par l'équation 1 ci-dessous soit de 50 % à 98 %, [Équation 1] Taux d'élimination de solvant (%) = (poids de la feuille d'électrode avant le processus de séchage principal - poids de la feuille d'électrode après le processus de séchage principal) $\times$ 100/(poids de la feuille d'électrode avant le processus de séchage principal - poids de la feuille d'électrode après le processus de séchage supplémentaire),  [Equation 1]

**caractérisé en ce que** le procédé met en œuvre l'appareil de séchage de feuille d'électrode (100, 200) selon la revendication 1, dans lequel la température de l'air chaud pulvérisé à partir d'un trou de pulvérisation d'air unique (121c) est de 50 °C à 150 °C.

12. Procédé de séchage de feuille d'électrode selon la revendication 11, dans lequel le rouleau flottant à air (121, 221) présente une forme cylindrique creuse et présente une pluralité de trous de pulvérisation d'air (121c) pour pulvériser de l'air chaud sur une surface circonférentielle externe (121a).

13. Procédé de séchage de feuille d'électrode selon la revendication 12, dans lequel la pression de l'air chaud pulvérisé à partir d'un trou de pulvérisation d'air unique (121c) est de 0,01 MPa à 0,5 MPa.

[FIG. 1]

[FIG. 2]

121

121c

121a

121b

y ← x

[FIG. 3]

[FIG. 4]

[FIG. 5]

[FIG. 6]

[FIG. 7]

[FIG. 8]

START

MAIN DRYING PROCESS OF DRYING ELECTRODE
SHEET ON WHICH ELECTRODE SLURRY IS APPLIED — S1
ON CURRENT COLLECTOR IN DRYING OVEN

ADDITIONAL DRYING PROCESS OF ADDITIONALLY
DRYING ELECTRODE SHEET BEING TRANSFERRED — S2
AFTER MAIN DRYING PROCESS

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210188503
- CN 204933849 U
- JP 2021114440 A
- JP 2017042704 A
- JP 2017036146 A
- JP 4782549 B
- JP H09161780 A